# EUROPEAN PATENT APPLICATION

(11) **EP 2 730 820 A1**
(43) Date of publication of application: **14.05.2014**
(21) Application number: 12807303.8
(22) Date of filing: 02.07.2012
(51) Int. Cl.: F16J 15/10, F02D 9/10, F02M 35/10

(54) **GASKET AND THROTTLE BODY**

(30) Priority: 04.07.2011 JP 2011147936
(71) Applicant: Mikuni Corporation, Tokyo 101-0021 (JP)
(72) Inventor: NISHIMURA Etsuo, Odawara-shi Kanagawa 250-0055 (JP)
(74) Representative: Edson, Russell Gregory
(86) International application number: PCT/JP2012/066911
(87) International publication number: WO 2013/005722

(57) **Abstract**

A gasket which is mounted in a groove formed in a first member and is elastic and which seals between the first member and a second member, including: a first contact section that comes in contact with the second member; a second contact member that comes in contact with one sidewall surface of the groove which is formed in such a way that a width of the groove becomes larger toward an opening section of the groove from a bottom of the groove; a third contact section that comes in contact with another sidewall surface of the groove which is formed in such a way that a width of the groove becomes larger toward the opening section from the bottom; and a fourth contact section that comes in contact with the bottom.

## Description

### Technical Field

The present invention relates to a gasket for sealing between two joint surfaces.

### Background Art

For example, when a throttle body is joined to an intake manifold and therefore communicates with the intake manifold, what is known is a gasket that works as a seal between a joint surface of the throttle body and a joint surface of the intake manifold.

Moreover, what is known is a gasket having a side-surface projection that protrudes in a groove-side-surface direction in such a way as to come in contact with, or comes closer to, a groove side face of a mounting groove (See Patent Document 1, for example).

### Prior Art Document

### Patent Document

Patent Document 1: Japanese Laid-open Patent Publication No. 2006-29364

### Summary of the Invention

### Problems to be Solved by the Invention

However, when the gasket is compressed as one of the joint surfaces is pressed against the other joint surface, deformation of one of the two joint surfaces may occur if a pressing force becomes larger due to resistance from the gasket.

The present invention has been made to solve the above problem. The object of the present invention is to provide a technique for reducing the resistance of the gasket when the gasket is compressed.

### Means for Solving the Problems

To solve the above problem, a gasket of an embodiment of the present invention, which is mounted in a groove formed in a first member and is elastic and which seals between the first member and a second member, includes: a first contact section that comes in contact with the second member; a second contact member that comes in contact with one sidewall surface of the groove which is formed in such a way that a width of the groove becomes larger toward an opening section of the groove from a bottom of the groove; a third contact section that comes in contact with another sidewall surface of the groove which is formed in such a way that a width of the groove becomes larger toward the opening section from the bottom; and a fourth contact section that comes in contact with the bottom.

A throttle body of another embodiment of the present invention, which is mounted on an intake manifold, includes: a joint section which has a plane facing a joint surface of the intake manifold, and in which an opening is formed within the plane so as to communicate with the intake manifold and an annular groove is formed at a periphery of the opening, and which is so formed that a width of the groove becomes larger toward an opening section of the groove from a bottom of the groove; and a gasket which is mounted in the groove and is elastic, and which includes a first contact section that comes in contact with a joint surface of the intake manifold, a second contact section that comes in contact with an inner-peripheral sidewall surface of the groove, a third contact section that comes in contact with an outer-peripheral sidewall surface of the groove, and a fourth contact section that comes in contact with the bottom, and which seals a periphery of the opening of the throttle body mounted on the intake manifold in such a way that the intake manifold communicates with the opening.

### Advantages of the Invention

According to the present invention, when the gasket is compressed, the resistance of the gasket can be reduced.

### Brief Description of the Drawings

FIG. 1 is an exploded perspective view showing the configuration of an intake-system module.
FIG. 2 is an exploded cross-sectional view showing the configuration of a bore, gaskets, and a housing section.
FIG. 3 is a cross-sectional view showing a gasket and an annular groove in a first state before the gasket is fitted into the annular groove.
FIG. 4 is a cross-sectional view showing a gasket and an annular groove in a second state in which a tip of a second contact section and a tip of a third contact section are in contact with a sidewall surface of an annular groove.
FIG. 5 is a cross-sectional view showing a gasket and an annular groove in a third state in which a tip of a first contact section is in contact with a housing section.
FIG. 6 is a cross-sectional view showing a gasket and an annular groove in a fourth state in which a tip of a fourth contact section is in contact with a bottom section of the annular groove.
FIG. 7 is a cross-sectional view showing a gasket and an annular groove in a fifth state in which a fourth contact section is compressed as the fourth contact section receives resistance from a bottom section.
FIG. 8 is a cross-sectional view showing a gasket and an annular groove in a sixth state in which a first contact section is compressed as the first contact section receives resistance from a housing section.
FIG. 9 is a cross-sectional view showing a bore, gaskets, and a housing section in a third state.
FIG. 10 is a cross-sectional view showing a bore, gaskets, and a housing section in a sixth state.

### Embodiments for Carrying Out the Invention

Hereinafter, an embodiment of the present invention will be described with reference to the accompanying drawings.

In the present embodiment, an intake-system module for an internal combustion engine will be described.

First, the configuration of the intake-system module will be described.

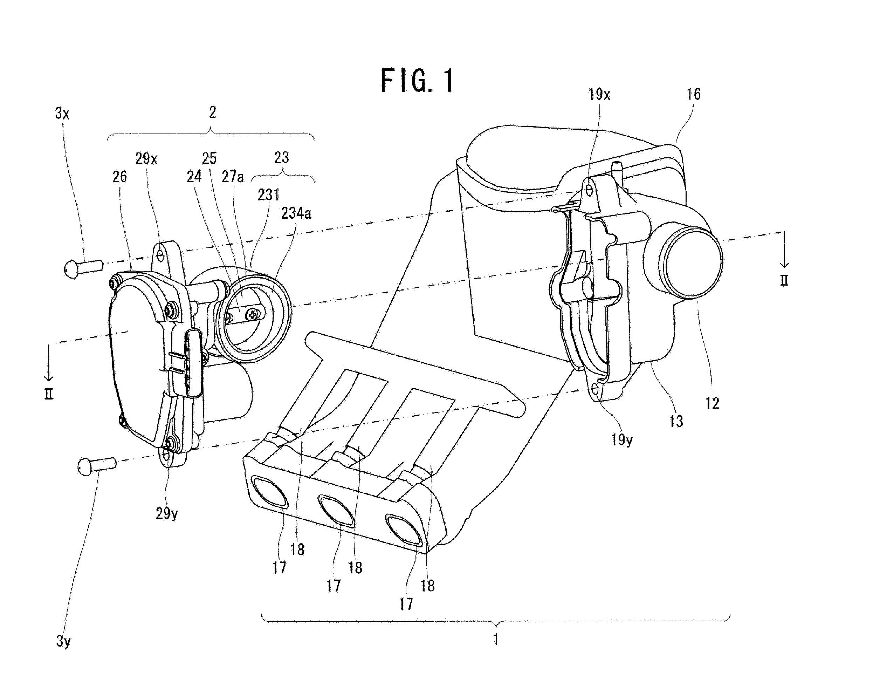

FIG. 1 is an exploded perspective view showing the configuration of the intake-system module. The intake-system module includes an intake manifold 1, which forms a flow path of the air; a throttle body 2, which is mounted on the intake manifold 1 and forms part of a flow path; and bolts 3x and 3y, which pass through the throttle body 2 and are fastened to the intake manifold 1. The intake manifold 1 distributes an inflow of the air to a plurality of cylinders of an internal combustion engine, which is not shown in the diagram. The throttle body 2 adjusts a flow rate of the air. The bolts 3x and 3y are fixed to the intake manifold 1 as the bolts 3x and 3y press the throttle body 2 against the intake manifold 1.

The intake manifold 1 includes an intake pipe 12, which has an upstream end that communicates with a downstream end of an air cleaner not shown in the diagram, and a downstream end that communicates with an upstream end of the throttle body 2; a housing section 13, which is provided on a downstream side of the intake pipe 12 and houses part of the throttle body 2; a surge tank 16, which is provided on a downstream side of the housing section 13 and has an upstream end that communicates with a downstream end of the throttle body 2; a plurality of distribution pipes 17, each of which has an upstream end that communicates with a downstream end of the surge tank 16, and a downstream end that communicates with each of a plurality of cylinders not shown in the diagram; a plurality of injectors 18, each of which is provided on a wall surface of each of a plurality of distribution pipes 17 and injects fuel into each of a plurality of distribution pipes 17; and fixing sections 19x and 19y, which are provided on an outer wall of the housing section 13 and to which the bolts 3x and 3y are fixed respectively.

The throttle body 2 includes a cylindrical bore 23, which has an upstream end that communicates with a downstream end of the intake pipe 12 and a downstream end that communicates with an upstream end of the surge tank 16; a shaft 24, which is provided in the bore 23 in such a way as to be perpendicular to a central axis (the direction of the flow of the air) of the bore 23; a throttle valve 25, which is a valve body fixed to the shaft 24 inside the bore 23; a drive section 26, which is connected to a base end of the shaft 24 and drives the shaft 24; gaskets 27a and 27b, which are provided at an upstream end and downstream end of the bore 23, respectively; and through-holes 29x and 29y, into which the bolts 3x and 3y are respectively inserted. The drive section 26 follows instructions from a control device, which is not shown in the diagram, and rotates the shaft 24; by changing the degree of opening of the throttle valve 25, the drive section 26 adjusts the flow rate of the air in the bore 23. The gaskets 27a and 27b are annular elastic bodies; the gaskets 27a and 27b are made of hydrogenated nitrile rubber or the like.

When the bore 23 is being inserted into the housing section 13, the shaft 24 moves on line II-II as shown in FIG. 1.

The air flowing out of the air cleaner into the intake-system module goes through the intake pipe 12, the bore 23, the surge tank 16, and each of a plurality of distribution pipes 17 before flowing out into each of a plurality of cylinders.

Incidentally, a first member described in the appended claims is for example the bore 23; a second member is for example the housing section 13.

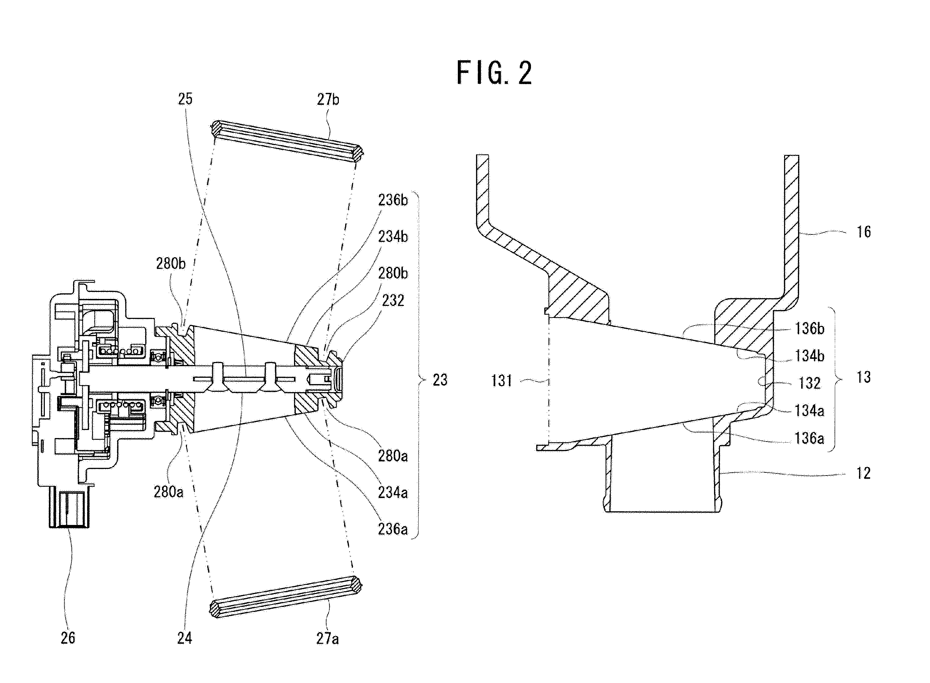

The bore 23, the gaskets 27a and 27b, and the housing section 13 will be described. FIG. 2 is an exploded cross-sectional view showing the configuration of the bore 23, the gaskets 27a and 27b, and the housing section 13. FIGS. 2 to 10 are cross-sectional views taken along arrow line II-II by a plane that goes through line II-II shown in FIG. 1 and the central axis of the bore 23.

The housing section 13 includes an insertion opening 131, which is an opening into which the bore 23 is inserted; a cylindrical inner wall surface 132, which is part of an inner wall that makes up a cylindrical inner wall surface and which covers a cylindrical outer wall surface of the bore 23; a joint inner wall surface 134a, which is part of the inner wall and is a plane that is joined to an upstream end of the bore 23; a joint inner wall surface 134b, which is part of the inner wall and is a plane that is joined to a downstream end of the bore 23; an inner wall opening 136a, which is an opening formed within the joint inner wall surface 134a and which communicates with an upstream end of the bore 23; and an inner wall opening 136b, which is an opening formed within the joint inner wall surface 134b and which communicates with a downstream end of the bore 23.

The bore 23 includes a cylindrical outer wall surface 232, which is part of an outer wall that makes up a cylindrical outer wall surface; a joint outer wall surface 234a, which is part of the outer wall and is a plane formed at an upstream end and which is joined to the joint inner wall surface 134a; a joint outer wall surface 234b, which is part of the outer wall and is a plane formed at a downstream end and which is joined to the joint inner wall surface 134b; an outer wall opening 236a, which is an opening formed within the joint outer wall surface 234a and which communicates with the inner wall opening 136a; an outer wall opening 236b, which is an opening formed within the joint outer wall surface 234b and which communicates with the inner wall opening 136b; an annular groove 280a, which is formed within the joint outer wall surface 234a and at a periphery of the outer wall opening 236a; and an annular groove 280b, which is formed within the joint outer wall surface 234b and at a periphery of the outer wall opening 236b.

The shape of the gaskets 27a and 27b is so formed as to match the shape of the annular grooves 280a and 280b, respectively. The gaskets 27a and 27b are fitted into the annular grooves 280a and 280b, respectively.

Incidentally, grooves described in the appended claims are for example the annular grooves 280a and 280b; openings are for example the outer wall openings 236a and 236b.

In this case, a plane that passes through the shaft 24 and is perpendicular to the central axis of the bore 23 is a reference plane. The opened throttle valve 25 is located within the reference plane or is within a certain angle from the reference plane. The shape of the joint inner wall surface 134a and inner wall opening 136a, and the shape of the joint inner wall surface 134b and inner wall opening 136b are plane-symmetrical with respect to the reference plane. Similarly, the shape of the joint outer wall surface 234a, outer wall opening 236a, annular groove 280a, and gasket 27a, and the shape of the joint outer wall surface 234b, outer wall opening 236b, annular groove 280b, and gasket 27b are plane-symmetrical with respect to the reference plane.

The joint inner wall surface 134a and the joint inner wall surface 134b each form a predetermined angle with respect to the reference surface. The distance between points on the joint inner wall surface 134a and the reference plane becomes gradually smaller in an insertion direction, or from the insertion opening 131 into the housing section 13. Similarly, the distance between points on the joint inner wall surface 134b and the reference plane becomes gradually smaller in the insertion direction. Accordingly, the length of a space inside the housing section 13 in the central-axis direction (direction of the flow of the air) of the bore 23 becomes gradually smaller in the insertion direction. To match the space inside the housing section 13, the length of the central-axis direction of the bore 23 becomes gradually smaller in an insertion direction, or from a base end of the shaft 24 to a tip thereof. Therefore, the shape of the outer wall openings 236a and 236b, which are cross-sections obtained by cutting the cylindrical bore 23 along the planes of the joint outer wall surfaces 234a and 234b, are elliptical. The shape of the inner wall openings 136a and 136b are the same as the outer wall openings 236a and 236b, which the inner wall openings 136a and 136b respectively communicate with.

The distance between the outer wall opening 236b and the annular groove 280b, which is formed at a periphery thereof, is not uniform; the distance is longer in a portion of a shaft 24' s tip side. Accordingly, when seen from on the central axis of the bore 23, the annular groove 280b on the joint outer wall surface 234b and the gasket 27b are egg-shaped. When the gasket 27b that is fitted into the annular groove 280b comes in contact with the joint inner wall surface 134b, a portion of the gasket 27b that is on the shaft 24' s tip side comes in contact with a portion of the joint inner wall surface 134b that is on an outer periphery side of the inner wall opening 136b. Therefore, when the bore 23 is inserted into the housing section 13, the gasket 27b is not stopped by an edge of the inner wall opening 136b, and the gasket 27b therefore can smoothly slide on the joint inner wall surface 134b.

The following describes the gaskets 27a and 27b and the annular grooves 280a and 280b, as well as a mounting process of mounting the throttle body 2 on the intake manifold 1.

Here, the configuration of the gasket 27b and annular groove 280b, and changes in state will be described. The gasket 27a and annular groove 280a have the same configuration as the gasket 27b and annular groove 280b, which are respectively plane-symmetrical to the gasket 27a and annular groove 280a; the state changes in a similar way.

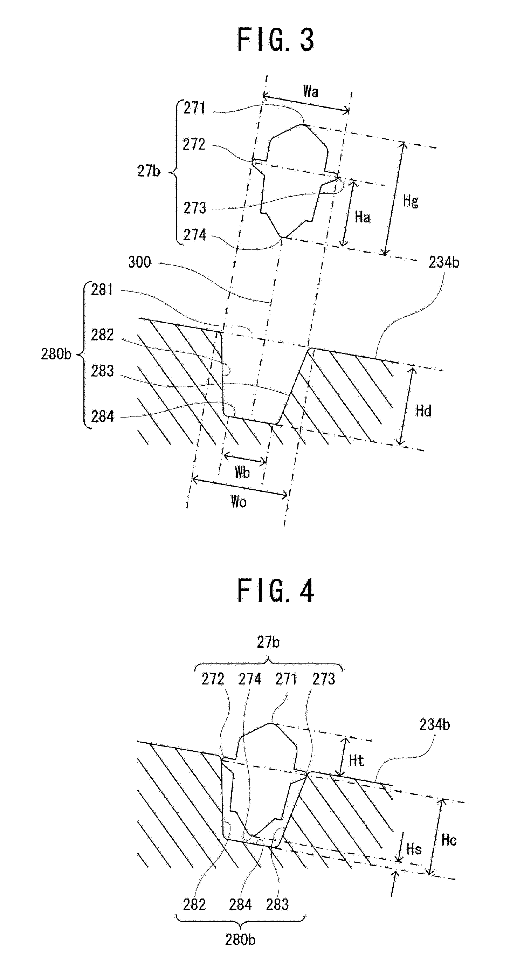

First, a state in which the gasket 27b is not yet fitted into the annular groove 280b is referred to as a first state. As shown in FIG. 2, in a cross-sectional view taken along arrow line II-II of the gasket 27b and in a cross-sectional view taken along arrow line II-II of the annular groove 280b, a cross-section of the shaft 24' s tip side and a cross section of a shaft 24's base end side emerge. A cross-sectional shape of the gasket 27b and annular groove 280b on the shaft 24's tip side is the same as a cross-sectional shape of the gasket 27b and annular groove 280b on the shaft 24's base end side. Accordingly, FIGS. 3, 4, 5, 6, 7, and 8 show only a cross-section on the shaft 24's tip side, out of the two cross-sections. FIG.3 is a cross-sectional view showing the gasket 27b and the annular groove 280b in the first state.

The annular groove 280b includes an opening section 281, which is an opening formed within a plane of the joint outer wall surface 234b; a sidewall surface 282, which is located on an inner periphery side within an inner wall surface; a sidewall surface 283, which is located on an outer periphery side within an inner wall surface; and a bottom section 284, which is a bottom of the annular groove 280b within an inner wall surface. In a cross-section thereof, along a center line 300 of the gasket 27b and annular groove 280b, if a height-direction length of the gasket 27b is Hg, and a depth-direction length of the annular groove 280b is Hd, Hg is greater than Hd.

The shape of the cross-section of the annular groove 280b that is perpendicular to a circumferential direction (length direction) is trapezoidal. Along the joint outer wall surface 234b, if the width of the groove in the bottom section 284 is Wb, and the width of the groove in the opening section 281 is Wo, Wb is smaller than Wo. In the space inside the annular groove 280b, as the height position goes higher from the bottom section 284 toward the opening section 281, the groove-width-direction length becomes gradually larger. The sidewall surfaces 282 and 283 each make a predetermined angle with respect to the center line 300. The inner-peripheral-side sidewall surface 282 is tilted toward the opening section 281 from an outer peripheral direction of the annular groove 280b; the outer-peripheral-side sidewall surface 283 is tilted toward the opening section 281 from an inner peripheral direction of the annular groove 280b.

The gasket 27b includes a first contact section 271, which protrudes in a height direction that is opposite to a depth direction of the annular groove 280b; a second contact section 272, which protrudes toward an inner periphery of the gasket 27b; a third contact section 273, which protrudes toward an outer periphery of the gasket 27b; and a fourth contact section 274, which protrudes in the depth direction of the annular groove 280b and faces the bottom section 284. The cross-sectional shape of the first contact section 271, second contact section 272, third contact section 273, and fourth contact section 274 is so formed as to become gradually narrower toward the tip.

In the first state, the height from the tip of the fourth contact section 274 to the tip of the second contact section 272 is equal to the height from the tip of the fourth contact section 274 to the tip of the third contact section 273; if the heights are represented by Ha, Ha is smaller than Hd. If the groove-width-direction length from the tip of the second contact section 272 to the tip of the third contact section 273 in the first state is Wa, Wa is greater than Wb but smaller than Wo.

The gasket 27b in the first state moves along the center line 300 and in the depth direction, and is inserted into the annular groove 280b. Then, because of the above relationship Wb<Wa<Wo, the tip of the second contact section 272 comes in contact with the sidewall surface 282, and the tip of the third contact section 273 comes in contact with the sidewall surface 283. The second contact section 272 receives resistance from the sidewall surface 282; the third contact section 273 receives resistance from the sidewall surface 283. Therefore, the gasket 27b is supported by the annular groove 280b; this state is referred to as a second state. FIG. 4 is a cross-sectional view showing the gasket 27b and the annular groove 280b in the second state.

In the second state, the height position where the sidewall surface 282 supports the second contact section 272 is equal to the height position where the sidewall surface 283 supports the third contact section 273. If the height from the bottom section 284 to the above height positions (support positions) is Hc, Hc is greater than Ha but smaller than Hd. That is, in the second state, the tip of the fourth contact section 274 is a distance equivalent to height Hs away from the bottom section 284. In the second state, if the height to the tip of the first contact section 271 protruding from the opening section 281, i.e. the height from the joint outer wall surface 234b to the tip of the first contact section 271, is Ht, Ht is greater than Hs.

After the gasket 27b is fitted into the annular groove 280b and enters the second state, the bore 23 is inserted into the housing section 13 through the insertion opening 131. In this case, suppose that the distance between the joint outer wall surface 234b and the joint inner wall surface 134b is Dg. The joint outer wall surface 234b and the joint inner wall surface 134b form a predetermined angle with respect to the insertion direction. Therefore, the joint inner wall surface 134b approaches relatively diagonally while remaining parallel to the joint outer wall surface 234b.

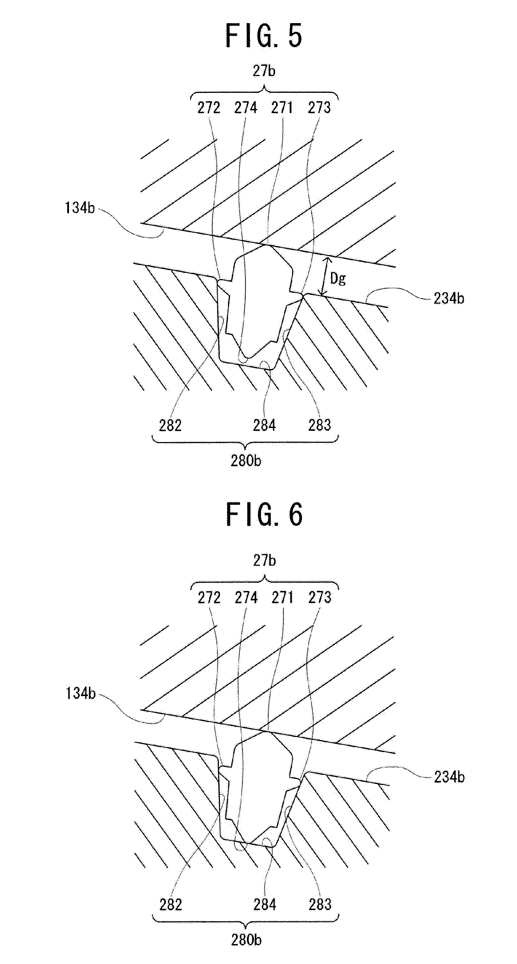

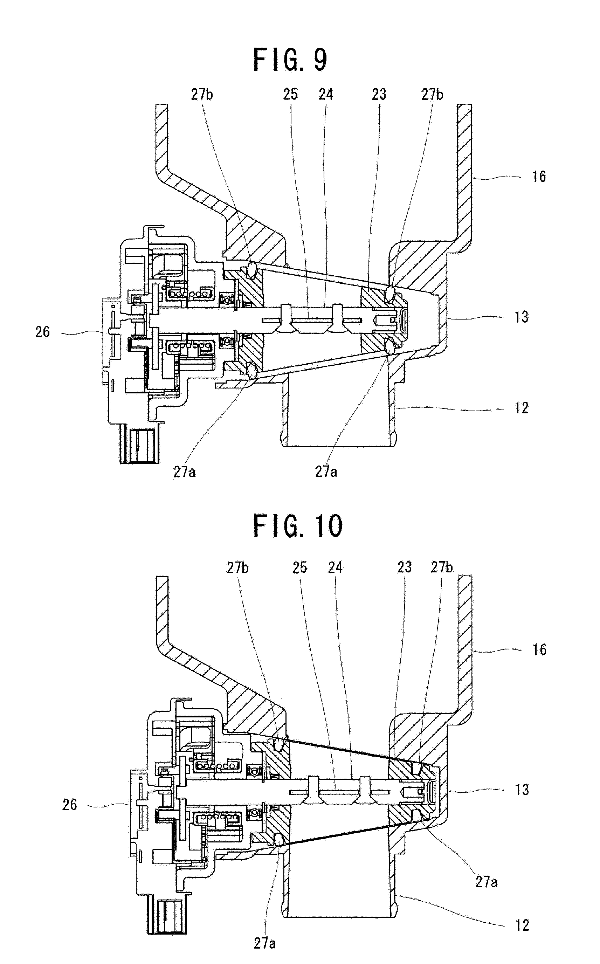

As the bore 23 moves in the insertion direction, and Dg becomes smaller, the tip of the first contact section 271 comes in contact with the joint inner wall surface 134b; this state is referred to as a third state. FIG. 9 is a cross-sectional view showing the bore 23, the gaskets 27a and 27b, and the housing section 13 in the third state. FIG. 5 is a cross-sectional view showing the gasket 27b and the annular groove 280b in the third state. Because of the above-described plane-symmetrical shape, the tip of the first contact section 271 of the gasket 27b comes in contact with the joint inner wall surface 134b, and, at the same time, the tip of the first contact section 271 of the gasket 27a comes in contact with the joint inner wall surface 134a. Moreover, because of the above-described plane-symmetrical shape, the distance between the joint inner wall surface 134a and the joint outer wall surface 234a is equal to Dg.

As the bore 23 in the third state is further inserted, and Dg becomes even smaller, the joint inner wall surface 134b presses the first contact section 271 in the depth direction. By the pressing force, the first contact section 271, the second contact section 272, the third contact section 273, and the fourth contact section 274 are moved in the depth direction. During this process, the second contact section 272 is compressed as the second contact section 272 receives resistance from the sidewall surface 282, and the third contact section 273 is compressed as the third contact section 273 receives resistance from the sidewall surface 283, and the tip of the fourth contact section 274 comes in contact with the bottom section 284; this state is referred to as a fourth state. FIG. 6 is a cross-sectional view showing the gasket 27b and the annular groove 280b in the fourth state. At this time, because of the above relationship Hg>Hd, the first contact section 271 protrudes in the height direction from the joint outer wall surface 234b.

The cross-sectional shape of the second contact section 272 and third contact section 273 is slimmer than the cross-sectional shape of the first contact section 271. The rigidity of the second contact section 272 and third contact section 273 is lower than the rigidity of the first contact section 271. Moreover, the distance between the sidewall surfaces 282 and 283 and the center line 300 becomes gradually narrower in the depth direction. Therefore, after the third state, the second contact section 272 and the third contact section 273 each are compressed as the second contact section 272 and the third contact section 273 receive resistance from the sidewall surfaces 282 and 283, and gradually move in the depth direction.

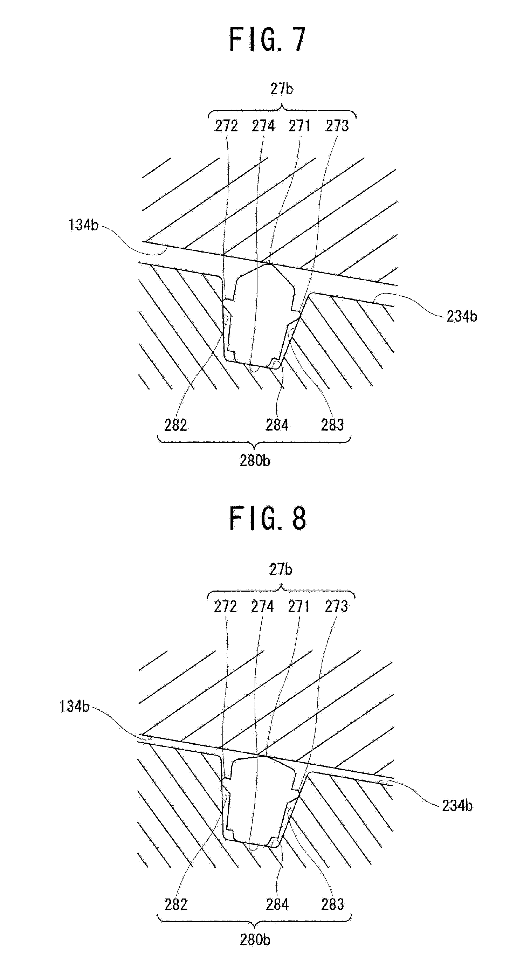

As the bore 23 in the fourth state is further inserted, and Dg becomes even smaller, the joint inner wall surface 134b further presses the first contact section 271 in the depth direction. By the pressing force, the second contact section 272, the third contact section 273, and the fourth contact section 274 are moved in the depth direction. During this process, the second contact section 272 is compressed as the second contact section 272 receives resistance from the sidewall surface 282, and the third contact section 273 is compressed as the third contact section 273 receives resistance from the sidewall surface 283, and the fourth contact section 274 is compressed as the fourth contact section 274 receives resistance from the bottom section 284; this state is referred to as a fifth state. FIG. 7 is a cross-sectional view showing the gasket 27b and the annular groove 280b in the fifth state.

The groove-width-direction width of the fourth contact section 274 is smaller than the groove-width-direction width of the first contact section 271. The rigidity of the fourth contact section 274 is lower than the rigidity of the first contact section 271. Accordingly, in the fourth to fifth states, when the first contact section 271 receives resistance from the joint inner wall surface 134b, and when the fourth contact section 274 receives resistance from the bottom section 284, a decrease in the height of the fourth contact section 274 is greater than a decrease in the height of the first contact section 271.

As the bore 23 in the fifth state is further inserted, and Dg becomes even smaller, the joint inner wall surface 134b further presses the first contact section 271 in the depth direction. During this process, the second contact section 272, the third contact section 273, and the fourth contact section 274 remain almost unmoved and unchanged in shape, and the first contact section 271 is compressed by the pressing force from the joint inner wall surface 134b; this state is referred to as a sixth state. FIG. 10 is a cross-sectional view showing the bore 23, the gaskets 27a and 27b, and the housing section 13 in the sixth state. FIG. 8 is a cross-sectional view showing the gasket 27b and the annular groove 280b in the sixth state.

In the mounting process, the bolts 3x and 3y are inserted into the through-holes 29x and 29y, respectively, and are fixed to the fixing sections 19x and 19y, respectively. As a result, the throttle body 2 is fixed to the intake manifold 1. In this manner, the mounting process is completed.

In the above mounting process, Dg is minimized, and a space between the periphery of the inner wall opening 136b and the periphery of the outer wall opening 236b is sealed. Similarly, a space between the periphery of the inner wall opening 136a and the periphery of the outer wall opening 236a is sealed. As a result, the intake pipe 12, the bore 23, and the surge tank 16 communicate with each other.

In the second to fourth states, only the second contact section 272 and the third contact section 273 are in contact with the annular groove 280b. Accordingly, compared with a gasket that is already in contact with a bottom section of a groove before the gasket is pressed, a smaller insertion load is required to insert the bore 23 into the housing section 13 in the gasket 27b of the present embodiment. Moreover, the rigidity of the fourth contact section 274 is lower than the rigidity of the first contact section 271. Therefore, in the fourth to fifth states, mainly the fourth contact section 274 of the gasket 27b is compressed. Therefore, compared with a gasket in which the shape of a portion facing a bottom section of a groove is planar, a smaller insertion load is required to insert the bore 23 into the housing section 13 in the gasket 27b of the present embodiment. As described above, the force of pressing the bore 23 against the housing section 13 can be reduced; deformation of the intake manifold 1 or throttle body 2 associated with the pressing therefore can be prevented.

Compared with a gasket in which the cross-sectional shape of a portion facing a bottom section 284 is wider than a fourth contact section 274, a decrease in the height of the gasket 27b of the present embodiment caused by compression (to-be-compressed margin) is smaller. However, three locations, i.e. the second contact section 272, the third contact section 273, and the fourth contact section 274, are in contact with the annular groove 280b when being compressed. Therefore, it is possible to ensure sealing performance with the annular groove 280b.

The gasket 27b has the same cross-section across the entire circumference. Therefore, it is possible to suppress fluctuations in the rigidity of the gasket 27b, which could vary depending on the circumferential-direction position. Therefore, when the bore 23 is inserted into the housing section 13, the gasket 27b is evenly compressed at any circumferential-direction position. Accordingly, an annular seal plane formed by the first contact section 271 remains planar; it is possible to ensure sealing performance with the joint inner wall surface 134b.

The gaskets of the present invention can be applied not only to the throttle body, but also to an intake duct, which is connected to the air cleaner, an inlet pipe, which is connected to an engine, and an exhaust valve assembly, which controls an amount of air in an exhaust flow path.

### Explanation of Reference Symbols

- 1:: Intake manifold
- 2:: Throttle body
- 3x, 3y:: Bolt
- 12:: Intake pipe
- 13:: Housing section
- 16:: Surge tank
- 17:: Distribution pipe
- 18:: Injector
- 19x, 19y:: Fixing section
- 23:: Bore
- 24:: Shaft
- 25:: Throttle valve
- 26:: Drive section
- 27a, 27b:: Gasket
- 29x, 29y:: Through-hole
- 131:: Insertion opening
- 132:: Cylindrical inner wall surface
- 134a, 134b:: Joint inner wall surface
- 136a, 136b:: Inner wall opening
- 232:: Cylindrical outer wall surface
- 234a, 234b:: Joint outer wall surface
- 236a, 236b:: Outer wall opening
- 271:: First contact section
- 272:: Second contact section
- 273:: Third contact section
- 274:: Fourth contact section
- 280a, 280b:: Annular groove
- 281_{:}: Opening section
- 282, 283:: Sidewall surface
- 284:: Bottom section
- 300:: Center line

## Claims

1. A gasket which is mounted in a groove formed in a first member and is elastic and which seals between the first member and a second member, comprising:
a first contact section that comes in contact with the second member;
a second contact member that comes in contact with one sidewall surface of the groove which is formed in such a way that a width of the groove becomes larger toward an opening section of the groove from a bottom of the groove;
a third contact section that comes in contact with another sidewall surface of the groove which is formed in such a way that a width of the groove becomes larger toward the opening section from the bottom; and
a fourth contact section that comes in contact with the bottom.

2. The gasket according to claim 1, wherein
the gasket is so formed that, when the gasket is supported in such a way that a tip of the second contact section and a tip of the third contact section are in contact with the one sidewall surface and the another sidewall surface, respectively, a distance in a direction of depth of the groove from the support position to a tip of the fourth contact section is smaller than a distance in the depth direction from the support position to the bottom.

3. The gasket according to claim 2, wherein
the gasket is so formed that a distance in the depth direction from a tip of the first contact section to a tip of the fourth contact section is larger than depth of the groove.

4. The gasket according to claim 1, wherein
a cross-sectional shape in the groove that is perpendicular to a length direction of the groove is trapezoidal.

5. A throttle body that is mounted on an intake manifold, comprising:
a joint section which has a plane facing a joint surface of the intake manifold, and in which an opening is formed within the plane so as to communicate with the intake manifold and an annular groove is formed at a periphery of the opening, and which is so formed that a width of the groove becomes larger toward an opening section of the groove from a bottom of the groove; and
a gasket which is mounted in the groove and is elastic, and which includes a first contact section that comes in contact with a joint surface of the intake manifold, a second contact section that comes in contact with an inner-peripheral sidewall surface of the groove, a third contact section that comes in contact with an outer-peripheral sidewall surface of the groove, and a fourth contact section that comes in contact with the bottom, and which seals a periphery of the opening of the throttle body mounted on the intake manifold in such a way that the intake manifold communicates with the opening.

6. The throttle body according to claim 5, wherein
the gasket is so formed that, when the gasket is supported in such a way that a tip of the second contact section and a tip of the third contact section are in contact with the one sidewall surface and the another sidewall surface, respectively, a distance in a direction of depth of the groove from the support position to a tip of the fourth contact section is smaller than a distance in the depth direction from the support position to the bottom.

7. The throttle body according to claim 6, wherein
the gasket is so formed that a distance in the depth direction from a tip of the first contact section to a tip of the fourth contact section is larger than depth of the groove.
